# EUROPÄISCHE PATENTSCHRIFT

(11) **EP 3 825 154 B1**
(45) Veröffentlichungstag und Bekanntmachung des Hinweises auf die Patenterteilung: **06.12.2023**
(21) Anmeldenummer: 20202478.2
(22) Anmeldetag: 19.10.2020
(51) Int. Cl.: B60C 15/024

(54) **FAHRZEUGLUFTREIFEN AUFWEISEND EINE WULSTLIPPE**
PNEUMATIC VEHICLE TYRE WITH A BEADED LIP
PNEUMATIQUES DE VÉHICULE COMPORTANT UNE LÈVRE DU TALON DE PNEU

(30) Priorität: 25.11.2019 DE 102019218120
(43) Veröffentlichungstag der Anmeldung: 26.05.2021
(73) Patentinhaber: Continental Reifen Deutschland GmbH, 30165 Hannover (DE)
(72) Erfinder: Henze, Eugen, 30419 Hannover (DE); Özüduru, Ahmet, 30419 Hannover (DE); Metge, Axel, 30419 Hannover (DE); Arensmeier, Jörg, 30419 Hannover (DE)
(74) Vertreter: Continental Corporation

(56) Entgegenhaltungen:
- EP-A1- 2 127 913
- EP-A1- 2 433 818
- EP-A2- 1 036 675
- DE-A1- 3 616 199
- DE-A1-102007 049 943
- JP-A- 2007 160 983

## Beschreibung

Die Erfindung betrifft einen Fahrzeugluftreifen mit einem Laufstreifen, zwei Seitenwänden und zwei Wulstbereichen, wobei der Fahrzeugluftreifen geeignet ist zur Montage auf eine Felge mit einem gekrümmten Felgenhornbereich mit einem Felgenhornradius R1 von mindestens 9,5 mm.

Weiter betrifft die Erfindung eine Kombination aus einem Fahrzeugluftreifen mit einem Laufstreifen, zwei Seitenwänden und zwei Wulstbereichen und einer Felge mit einem gekrümmten Felgenhornbereich mit einem Felgenhornradius R1 von mindestens 9,5 mm.

In Märkten mit feuchten Klimabedingungen und Sand (z.B. als Winterstreugut) auf der Fahrbahn kann es zu Abrieberscheinungen des Felgenhorns insbesondere von Aluminiumfelgen kommen. Die Ursache dafür ist, dass beim Einrollen des Reifens in seine Aufstandsfläche Relativbewegungen zwischen dem mit dem Felgenhorn in Berührung kommenden Wulststreifen des Reifens und dem Felgenhorn stattfinden. Wenn zuvor Sand zwischen den Wulststreifen und das Felgenhorn gelangt ist, können nachteilige Abrieberscheinungen auftreten.

Bekannt sind Reifen aufweisend eine Felgenschutzrippe zum Schutz der Felge vor Bordsteinberührung. Diese steht am montierten Reifen üblicherweise axial über das Felgenhorn hinaus und ist radial beabstandet zum Felgenhorn angeordnet.

Solche Reifen mit Felgenschutzrippe sind aus EP 2 127 913 A1, EP 2 433 818 A1, JP 2007 160983 A und EP 1 036 675 A2 bekannt. Die DE 10 2007 049943 A1 definiert die Krümmung eines Fahrzeugluftreifens ohne Felgenschutzrippe im Anlagebereich des Felgenhorns.

Aufgabe der vorliegenden Erfindung ist es, eine verbesserte Haltbarkeit des Felgenhorns bezüglich Abriebs zu ermöglichen.

Die Aufgabe wird durch einen Fahrzeugluftreifen nach Anspruch 1 gelöst.

Erfindungswesentlich ist, dass die ganz oder teilweise zur Auflage auf einen gekrümmten Felgenhornbereich bestimmte Wulstlippenoberfläche konkav gekrümmt ist und dabei einen Krümmungsradius Radius R2 von R2 < 9,5 mm aufweist. Somit weist die Wulstlippenoberfläche einen geringeren Krümmungsradius R2 auf als der Felgenhornradius R1.

Durch das Verhältnis von R2/R1 < 1 ist bei einer Überlagerung der Konturen von Felge und Reifen im unmontierten Zustand eine Überschneidung der Wulstlippe im Bereich der Wulstlippenoberfläche und des Felgenhorns ermöglicht. Beim auf der Felge montierten Reifen ist somit, insbesondere beim Einrollen des Reifens in seine Aufstandsfläche, eine Presspassung ermöglicht. Die Wulstlippe erfüllt dann eine Abdichtfunktion zum Felgenhorn, wodurch der Felgenhornabrieb durch Partikel, die im Betrieb des Reifens zwischen Wulstbereich und Felgenhorn gelangen, verringert ist.

Somit ist ein Reifen zur Verfügung gestellt, der im Betrieb eine verbesserte Haltbarkeit des Felgenhorns bezüglich Abriebs ermöglicht.

Der Beschreibung des erfindungsgemäßen Reifens wird der nicht auf die Felge aufgezogene vulkanisierte Reifen zugrunde gelegt. Die Bezeichnung der Krümmung als konkav oder konvex bezieht sich auf eine Blickrichtung von axial außen auf die Reifenoberfläche.

Bei der Felge kann es sich um eine Felge mit J-Profil gemäß E.T.R.T.O. (European Tire and Rim Technical Organization) oder gemäß TRA (The Tire and Rim Association) handeln. Diese weisen einen als "R1" bezeichneten Felgenhornradius von mindestens 9,5 mm auf.

Die erfindungsgemäße Ausführungsform ist dadurch gegeben, dass die Wulstlippenoberfläche einen Kreisbogen mit Radius R2 von R2 < 9,5 mm aufweist.

Hierdurch ist eine besonders geeignete Form der Wulstlippenoberfläche geschaffen.

Die erfindungsgemäße Ausführungsform ist dadurch gegeben, dass der Radius R2 ein Verhältnis R2/9,5 mm von 0,57 bis 0,73, bevorzugt von 0,65 bis 0,73, erfüllt.

Hierdurch kann über den gesamten Abrollzyklus eine Presspassung und damit eine Abdichtung zwischen Wulstlippe und Felgenhorn noch besser sichergestellt werden. Eine vorteilhafte Ausführungsform ist auch dadurch gegeben, dass der Radius R2 6,0 mm bis 8,0 mm, bevorzugt in etwa 7,0 mm, beträgt.

Entsprechende Vorteile ergeben sich, wenn der Radius R2 6,0 mm bis 8,0 mm, bevorzugt in etwa 7,0 mm, aufweist.

Erfindungsgemäß hat der Kreisbogen einen Öffnungswinkel von 40° bis 55°, bevorzugt von 43° bis 50°.

Hierdurch steht ein für eine vorteilhafte Presspassung und damit eine Abdichtung ausreichender Bereich der Wulstlippenoberfläche zur Verfügung.

Eine vorteilhafte Ausführungsform ist dadurch gegeben, dass die Wulstlippe auf einer radialen Höhe von 13,6 mm bis 18,0 mm, bevorzugt 13,6 mm bis 15,6 mm, aufweist.

Eine derartige radiale Erstreckung der Wulstlippe hat sich als besonders vorteilhaft herausgestellt.

Die Höhe bemisst sich relativ zur Querschnittshöhe des nominalen Felgendurchmessers, bei welchem die nominative Felgenbreite bemessen ist.

Bei einem Felgendurchmesser von kleiner gleich 16 Inch ist eine radiale Höhe von 13,2 mm bevorzugt. Für einen Felgendurchmesser von größer als 16 Inch ist eine radiale Höhe von 14 mm bevorzugt.

Eine weitere vorteilhafte Ausführungsform ist dadurch gegeben, dass eine Überlagerung der Querschnitte von Felge und Reifen in unmontiertem Zustand eine Überschneidung im Bereich einer axial äußeren Wulstlippenkante mit einer Erstreckung senkrecht zur Felgenhornoberfläche von 0,2 mm bis 0,7 mm, bevorzugt von in etwa 0,3 mm, aufweist.

Hierdurch ist eine besonders vorteilhafte Presspassung ermöglicht.

Die Kante kann einen Winkel von maximal 90° aufweisen. Die Kante kann auch abgerundet, insbesondere konvex abgerundet, oder abgeschrägt sein. Die Kante kann auch eine Fase aufweisen.

Entsprechende Vorteile ergeben sich, wenn eine Überlagerung der Querschnitte von Felge und Reifen in unmontiertem Zustand eine Überschneidung im Bereich einer axial äußeren Wulstlippenkante mit einer axialen Erstreckung von 0,3 mm bis 0,7 mm, bevorzugt in etwa 0,5 mm, aufweist.

Eine vorteilhafte Ausführungsform ist auch dadurch gegeben, dass sich die konkav gekrümmte Wulstlippenoberfläche, im Reifenquerschnitt betrachtet, nach axial außen bis zu einer die Wulstlippe begrenzenden Kante erstreckt und dass sich die Wulstlippe von der Kante nach radial außen bis zur Seitenwand des Reifens erstreckt und mit dieser fluchtet, wobei die Kante axial innerhalb der maximalen axialen Breite der Seitenwand angeordnet ist.

Hierdurch ist eine Kontur ermöglicht, die bei einer Montage des Reifens auf einer Felge der die gesamte mit dem Felgenhorn in Berührung kommende Oberfläche der Wulstlippe durch die Wulstlippenoberfläche gebildet ist. Hierdurch ist eine besonders vorteilhafte Abdichtung zwischen Wulstlippe und Felgenhorn ermöglicht.

Die Kante kann einen Winkel von maximal 90° aufweisen. Die Kante kann auch abgerundet, insbesondere konvex abgerundet, oder abgeschrägt sein. Die Kante kann auch eine Fase aufweisen.

Eine weitere vorteilhafte Ausführungsform ist dadurch gegeben, dass sich die Wulstlippe, im Reifenquerschnitt betrachtet, von der Kante aus nach radial außen axial innerhalb einer kegelförmigen Hüllfläche erstreckt, welche tangential an der Wulstlippe im Bereich der Kante sowie der Seitenwand anliegt, bevorzugt dass sich die Wulstlippe, im Reifenquerschnitt betrachtet, von der Kante aus axial außerhalb der Kante angeordnet und mit einer konkaven Krümmung ausgebildet ist.

Hierdurch sind die Vorteile in der Haltbarkeit bei gleichzeitig geringem Materialeinsatz ermöglicht. Ein geringer Materialeinsatz wirkt sich vorteilhaft auf die Materialkosten, das Gewicht sowie den Rollwiderstand des Reifens aus.

Eine konkave Krümmung des Wulstlippenquerschnitts ermöglicht bei vorteilhaftem Geräuschverhalten einen besonders geringen Materialeinsatz.

Vorteilhaft ist es, wenn sich der Fahrzeugluftreifen zur Montage auf einer Felge mit J-Profil, bevorzugt auf einer Aluminiumfelge mit J-Profil, eignet.

Derartige Felgen weisen gemäß E.T.R.T.O. oder gemäß TRA einen minimalen Felgenhornradius R1 von 9,5 mm auf. Die spezielle Form der Wulstlippe ist besonders zum Schutz von Felgen mit J-Profil, bevorzugt von Aluminiumfelgen mit J Profil, geeignet.

Eine vorteilhafte Ausführungsform ist dadurch gegeben, dass der Reifen für einen Van oder für einen Personenkraftwagen, bevorzugt für einen Van, geeignet ist.

Van Reifen weisen im Vergleich zu Reifen für Personenkraftwagen höhere Wulstbelastungen auf. Hierdurch kann ein höherer Abrieb des Felgenhorns entstehen, sodass sich besonders hier der positive Effekt der speziellen Kontur der Wulstlippe bemerkbar macht. Ein vorteilhafter Felgenschutz gegenüber Abrieb ist aber auch für Reifen für Personenkraftwagen gegeben. Bevorzugt ist der Reifen dabei für eine Felge mit J-Profil geeignet.

Der erfindungsgemäße Reifen kann sich aber auch für andere Einsatzgebiete eignen.

Die Aufgabe wird bezüglich des Fahrzeugrades dadurch gelöst, dass axial außen zumindest auf einer Reifenseitenwand eine über den Umfang der Reifenseitenwand umlaufende Wulstlippe angeordnet ist, dass die Wulstlippe axial außen eine Wulstlippenoberfläche aufweist, die ganz oder teilweise auf dem gekrümmten Felgenhornbereich der Felge aufliegt, dass die Wulstlippenoberfläche im Reifenquerschnitt betrachtet konkav gekrümmt ist und dabei im unmontierten Zustand in ihrem Querschnitt eine Krümmung aufweisend einen Krümmungsradius R2 von R2 < 9,5 mm umfasst, wodurch im montierten Zustand eine Presspassung zwischen Wulstlippe und dem gekrümmten Felgenhornbereich erfolgt.

Beim auf der Felge montierten Reifen ist somit, insbesondere beim Einrollen des Reifens in seine Aufstandsfläche, eine Presspassung ermöglicht. Die Wulstlippe erfüllt dann eine Abdichtfunktion zum Felgenhorn, wodurch der Felgenhornabrieb durch Partikel, die im Betrieb des Reifens zwischen Wulstbereich und Felgenhorn gelangen, verringert ist.

Somit ist ein Fahrzeugrad zur Verfügung gestellt, welches im Betrieb eine verbesserte Haltbarkeit des Felgenhorns bezüglich Abriebs aufweist.

Es kann sich bei dem Reifen um einen erfindungsgemäßen Reifen gemäß den vorangegangenen Ausführungen handeln. Die Felge ist bevorzugt eine Felge mit J-Profil gemäß E.T.R.T.O. oder TRA.

Weitere Merkmale, Vorteile und Einzelheiten der Erfindung werden anhand der Zeichnungen, die schematische Ausführungsbeispiele darstellen, näher erläutert. Es zeigen die
Fig. 1 einen Teilquerschnitt durch einen erfindungsgemäßen Reifen;
Fig. 2 einen Teilquerschnitt durch einen erfindungsgemäßen Reifen und eine Felge;
Fig. 3 einen Teilquerschnitt durch einen auf einer Felge montierten erfindungsgemäßen Reifen.

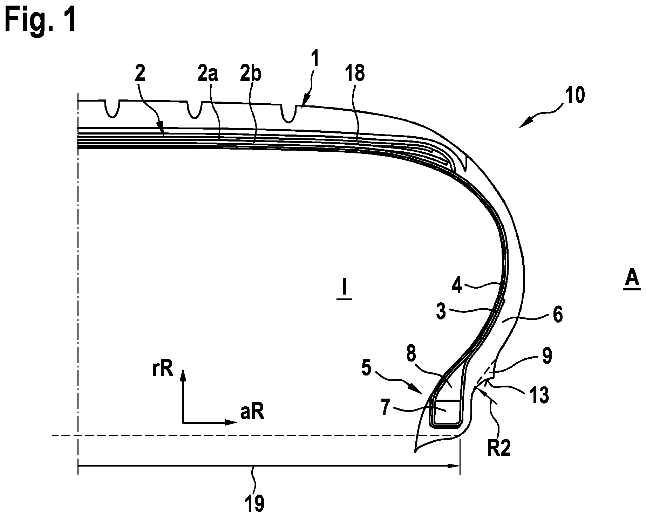

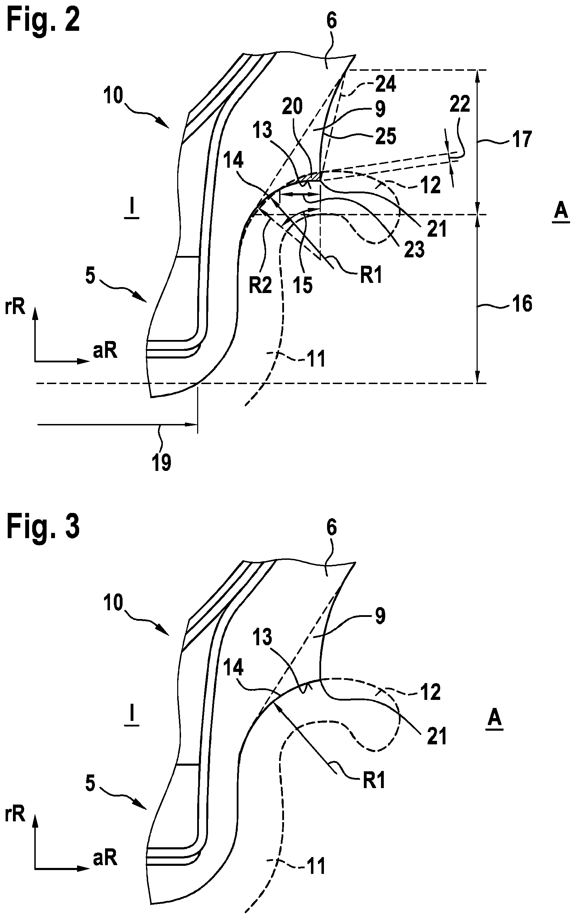

Die **Fig. 1** zeigt einen Teil-Querschnitt durch einen Radialreifen, welcher einen profilierten Laufstreifen 1, einen aus zwei Lagen 2a, 2b, bestehenden Gürtel 2, welcher durch eine Bandage 18 abgedeckt ist, eine Radialkarkasse 3, eine luftdicht ausgeführte Innenschicht 4, Seitenwände 6 sowie Wulstbereiche 5 mit Wulstkernen 7 und Kernprofilen 8 aufweist. Der Fahrzeugluftreifen 10 ist geeignet zur Montage auf einer Felge 11 mit einem gekrümmten Felgenhornbereich 12 mit einem Felgenhornradius R1 von mindestens 9,5 mm, siehe beispielsweise Fig. 3.

Am Reifen 10 ist axial außen A zumindest auf einer Reifenseitenwand 6 eine über den Umfang der Reifenseitenwand umlaufende Wulstlippe 9 angeordnet. Die Wulstlippe 9 weist axial außen A eine Wulstlippenoberfläche 13 auf, die ganz oder teilweise zur Auflage auf den gekrümmten Felgenhornbereich 12 bestimmte ist. Die Wulstlippenoberfläche 13 ist im Reifenquerschnitt betrachtet konkav gekrümmt und weist dabei einen Krümmungsradius R2 von R2 < 9,5 mm auf.

Es kann sich z.B. um einen Radialreifen für einen Van oder einen Personenkraftwagen handeln.

In der **Fig. 2** ist eine Vergrößerung eines Teil-Querschnittes einer beispielhaften Ausführungsform eines erfindungsgemäßen Fahrzeugluftreifens 10 zumindest im Bereich der Wulstlippe 9 dargestellt. Der Übersichtlichkeit halber ist nur die Kontur des Reifens dargestellt. Es kann sich um den in der Figur 1 dargestellten Fahrzeugluftreifen 10 handeln. Weiter ist eine Kontur einer Felge 11 mit einem gekrümmten Felgenhornbereich 12 mit einem Felgenhornradius R1 von mindestens 9,5 mm dargestellt. Die beiden Querschnitte sind überlagert dargestellt, wobei der Fahrzeugluftreifen 10 in unmontiertem Zustand dargestellt ist.

Die Wulstlippenoberfläche 13 weist einen Kreisbogen 14 mit Radius R2 von R2 < 9,5 mm auf. Der Radius R2 erfüllt ein Verhältnis R2/9,5 mm von 0,57 bis 0,73, bevorzugt von 0,65 bis 0,73. Der Radius R2 kann auch 6,0 mm bis 8,0 mm, bevorzugt in etwa 7,0 mm, betragen. Der Kreisbogen 14 weist einen Öffnungswinkel 15 von 40° bis 55°, bevorzugt von 43° bis 50°, auf.

Die Wulstlippe 9 beginnt auf einer radialen Höhe 16 von 13 mm bis 15 mm und weist eine Höhenerstreckung 17 von 13,6 mm bis 18,0 mm, bevorzugt 13,6 mm bis 15,6 mm, auf. Die Höhe 16 bemisst sich relativ zur Querschnittshöhe des nominalen Felgendurchmessers, bei welchem die nominative Felgenbreite 19 bemessen ist. Bei einem Felgendurchmesser von kleiner gleich 16 Inch ist eine radiale Höhe 16 von 13,2 mm bevorzugt. Für einen Felgendurchmesser von größer als 16 Inch ist eine radiale Höhe 16 von 14 mm bevorzugt.

Die Überlagerung der Querschnitte von Felge 11 und Reifen 10 weisen in unmontiertem Zustand eine Überschneidung 20 im Bereich einer axial äußeren Wulstlippenkante 21 mit einer Erstreckung 22 senkrecht zur Felgenhornoberfläche von 0,2 mm bis 0,7 mm, bevorzugt von in etwa 0,3 mm, auf.

Die Überlagerung der Querschnitte von Felge 11 und Reifen 10 weisen in unmontiertem Zustand eine Überschneidung 20 im Bereich einer axial äußeren Wulstlippenkante 21 mit einer axialen Erstreckung 23 von 0,3 mm bis 0,7 mm, bevorzugt von in etwa 0,5 mm, auf.

Die konkav gekrümmte Wulstlippenoberfläche 13 erstreckt sich, im Reifenquerschnitt betrachtet, nach axial außen bis zu einer die Wulstlippe 9 begrenzenden Kante 21. Die Wulstlippe 9 erstreckt sich dabei von der Kante 21 nach radial außen bis zur Seitenwand 6 des Reifens 10 und fluchtet mit dieser, wobei die Kante 21 axial innerhalb der maximalen axialen Breite der Seitenwand 6 angeordnet ist.

Die Wulstlippe 9 erstreckt sich dabei, im Reifenquerschnitt betrachtet, von der Kante 21 aus nach radial außen axial innerhalb einer kegelförmigen Hüllfläche 24, welche tangential an der Wulstlippe 9 im Bereich der Kante 21 sowie der Seitenwand 6 anliegt. Bevorzugt ist die Wulstlippe 9, im Reifenquerschnitt betrachtet, von der Kante 21 aus axial außerhalb der Kante 21 angeordnet und mit einer konkaven Krümmung 25 ausgebildet.

Die Felge ist eine Felge 11 mit J-Profil, bevorzugt eine Aluminiumfelge mit J-Profil, gemäß E.T.R.T.O. oder gemäß TRA. Der Krümmungsradius R1 beträgt minimal 9,5 mm.

Die Fig. 3 zeigt ein erfindungsgemäßes Fahrzeugrad aus Felge 11 und Reifen 10, wobei der Reifen 10 auf der Felge 11 montiert ist. Es kann sich dabei um Felgen und Reifen aus der Figur 2 handeln. Es kann sich um den Reifen aus der Figur 1 handeln.

Der Fahrzeugluftreifen 10 ist auf der Felge 11 mit einem gekrümmten Felgenhornbereich 12 mit einem Felgenhornradius R1 von mindestens 9,5 mm montiert. Axial außen A ist dabei zumindest auf einer Reifenseitenwand 6 eine über den Umfang der Reifenseitenwand umlaufende Wulstlippe 9 angeordnet. Die Wulstlippe 9 weist axial außen A eine Wulstlippenoberfläche 13 auf, die ganz oder teilweise auf dem gekrümmten Felgenhornbereich 12 der Felge 11 aufliegt. Die Wulstlippenoberfläche 13 ist im Reifenquerschnitt betrachtet konkav gekrümmt und weist dabei im unmontierten Zustand in ihrem Querschnitt eine Krümmung mit einem Krümmungsradius R2 von R2 < 9,5 mm auf, wodurch im montierten dargestellten Zustand eine Presspassung zwischen Wulstlippe 9 und dem gekrümmten Felgenhornbereich 12 erfolgt.

### Bezugszeichenliste

1 Laufstreifen
2 Gürtel
3 Karkasse
4 Innenschicht
5 Wulstbereich
6 Seitenwand
7 Wulstkern
8 Kernreiter
9 Wulstlippe
10 Fahrzeugluftreifena
11 Felge
12 gekrümmter Felgenhornbereich
13 Wulstlippenoberfläche
14 Kreisbogen
15 Öffnungswinkel
16 Höhe
17 Höhenerstreckung
18 Bandagenlage
19 nominative Felgenbreite
20 Überschneidung
21 Wulstlippenkante
22 Erstreckung
23 axiale Erstreckung
24 Hüllfläche
25 Krümmung
R1 Felgenhornradius
R2 Krümmungsradius
A axial außen
I axial innen
rR radiale Richtung
aR axiale Richtung

## Patentansprüche

1. Fahrzeugluftreifen (10) mit einem Laufstreifen (1), zwei Seitenwänden (6) und zwei Wulstbereichen (5), wobei der Fahrzeugluftreifen (10) geeignet ist zur Montage auf eine Felge (11) mit einem gekrümmten Felgenhornbereich (12) mit einem Felgenhornradius R1 von mindestens 9,5 mm,
• wobei axial außen (A) zumindest auf einer Reifenseitenwand (6) eine über den Umfang der Reifenseitenwand umlaufende Wulstlippe (9) angeordnet ist,
• wobei die Wulstlippe (9) axial außen (A) eine Wulstlippenoberfläche (13) aufweist, die ganz oder teilweise zur Auflage auf den gekrümmten Felgenhornbereich (12) bestimmt ist,
• und wobei die Wulstlippenoberfläche (13) im Reifenquerschnitt betrachtet konkav gekrümmt ist und dabei einen Krümmungsradius R2 von R2 < 9,5 mm aufweist,
• dass die Wulstlippenoberfläche (13) einen Kreisbogen (14) mit Radius R2 von R2 < 9,5 mm aufweist,
**dadurch gekennzeichnet, dass**
• der Radius R2 ein Verhältnis R2/9,5 mm von 0,57 bis 0,73, erfüllt und
• dass der Kreisbogen (14) einen Öffnungswinkel (15) von 40° bis 55° aufweist.

2. Fahrzeugluftreifen (10) gemäß zumindest einem der vorhergehenden Ansprüche,
**dadurch gekennzeichnet, dass** der Radius R2 ein Verhältnis R2/9,5 mm von 0,65 bis 0,73, erfüllt.

3. Fahrzeugluftreifen (10) gemäß zumindest einem der vorhergehenden Ansprüche,
**dadurch gekennzeichnet, dass** der Radius R2 6,0 mm bis 8,0 mm, bevorzugt in etwa 7,0 mm, beträgt.

4. Fahrzeugluftreifen (10) gemäß zumindest Anspruch 2, **dadurch gekennzeichnet, dass** der Kreisbogen (14) einen Öffnungswinkel (15) von 43° bis 50° aufweist.

5. Fahrzeugluftreifen (10) gemäß zumindest einem der vorhergehenden Ansprüche,
**dadurch gekennzeichnet, dass** die Wulstlippe (9) auf einer radialen Höhe (16) von 13,6 mm bis 18,0 mm, bevorzugt 13,6 mm bis 15,6 mm, aufweist.

6. Fahrzeugluftreifen (10) gemäß zumindest einem der vorhergehenden Ansprüche,
**dadurch gekennzeichnet, dass** sich die konkav gekrümmte Wulstlippenoberfläche (13), im Reifenquerschnitt betrachtet, nach axial außen bis zu einer die Wulstlippe (9) begrenzenden Kante (21) erstreckt und dass sich die Wulstlippe (9) von der Kante (21) nach radial außen bis zur Seitenwand (6) des Reifens (10) erstreckt und mit dieser fluchtet, wobei die Kante (21) axial innerhalb der maximalen axialen Breite der Seitenwand angeordnet ist.

7. Fahrzeugluftreifen (10) gemäß zumindest dem vorhergehenden Anspruch, **dadurch gekennzeichnet, dass** sich die Wulstlippe (9), im Reifenquerschnitt betrachtet, von der Kante (21) aus nach radial außen axial innerhalb einer kegelförmigen Hüllfläche (24) erstreckt, welche tangential an der Wulstlippe (9) im Bereich der Kante (21) sowie der Seitenwand (6) anliegt, bevorzugt dass sich die Wulstlippe (9), im Reifenquerschnitt betrachtet, von der Kante (21) aus axial außerhalb der Kante (21) angeordnet und mit einer konkaven Krümmung ausgebildet ist.

8. Fahrzeugluftreifen (10) gemäß zumindest einem der vorhergehenden Ansprüche,
**dadurch gekennzeichnet, dass** sich der Fahrzeugluftreifen (10) zur Montage auf einer Felge (11) mit J-Profil, bevorzugt auf einer Aluminiumfelge mit J-Profil, eignet.

9. Fahrzeugluftreifen (10) gemäß zumindest einem der vorhergehenden Ansprüche,
**dadurch gekennzeichnet, dass** der Reifen für einen Van oder für einen Personenkraftwagen, bevorzugt für einen Van, geeignet ist.

10. Kombination aus einem Fahrzeugluftreifen (10) und einer Felge (11) mit einem gekrümmten Felgenhornbereich (12) mit einem Felgenhornradius R1 von mindestens 9,5 mm, wobei der Fahrzeugluftreifen (10) gemäß zumindest einem der vorhergehenden Ansprüche ausgebildet ist.
**dadurch gekennzeichnet, dass**
• eine Überlagerung der Querschnitte von Felge (11) und Reifen (12) in unmontiertem Zustand eine Überschneidung (20) im Bereich einer axial äußeren Wulstlippenkante (21) mit einer Erstreckung (22) senkrecht zur Felgenhornoberfläche von 0,2 mm bis 0,7 mm, bevorzugt von in etwa 0,3 mm, aufweist.

11. Kombination gemäß Anspruch 10,
**dadurch gekennzeichnet, dass**
• eine Überlagerung der Querschnitte von Felge (11) und Reifen (12) in unmontiertem Zustand eine Überschneidung (20) im Bereich einer axial äußeren Wulstlippenkante (21) mit einer axialen Erstreckung (23) von 0,3 mm bis 0,7 mm, bevorzugt in etwa 0,5 mm, aufweist.

## Claims

1. Pneumatic vehicle tyre (10) having a tread (1), having two side walls (6), and having two bead regions (5), wherein the pneumatic vehicle tyre (10) is suitable for mounting on a wheel rim (11) having a curved wheel-rim-flange region (12) with a wheel-rim-flange radius R1 of at least 9.5 mm,
• wherein a bead lip (9) running around the circumference of the tyre side wall is arranged axially at the outside (A) at least on a tyre side wall (6),
• wherein the bead lip (9), axially at the outside (A), has a bead-lip surface (13) which is intended wholly or partly for lying on the curved wheel-rim-flange region (12),
• and wherein the bead-lip surface (13), as viewed in the tyre cross section, is concavely curved and has a radius of curvature R2 of R2 < 9.5 mm,
• wherein the bead-lip surface (13) has a circular arc (14) with radius R2 of R2 < 9.5 mm,
**characterized in that**
• the radius R2 is such that a ratio R2/9.5 mm of 0.57 to 0.73 is satisfied, and
• **in that** the circular arc (14) has an opening angle (15) of 40° to 55°.

2. Pneumatic vehicle tyre (10) according to the preceding claim, **characterized in that** the radius R2 is such that a ratio R2/9.5 mm of 0.65 to 0.73 is satisfied.

3. Pneumatic vehicle tyre (10) according to at least either of the preceding claims, **characterized in that** the radius R2 is 6.0 mm to 8.0 mm, preferably approximately 7.0 mm.

4. Pneumatic vehicle tyre (10) according to at least Claim 2, **characterized in that** the circular arc (14) has an opening angle (15) of 43° to 50°.

5. Pneumatic vehicle tyre (10) according to at least one of the preceding claims, **characterized in that** the bead lip (9) has a radial height (16) of 13.6 mm to 18.0 mm, preferably 13.6 mm to 15.6 mm.

6. Pneumatic vehicle tyre (10) according to at least one of the preceding claims, **characterized in that** the concavely curved bead-lip surface (13), as viewed in the tyre cross section, extends axially outwards as far as an edge (21) which delimits the bead lip (9), and **in that** the bead lip (9) extends from the edge (21) radially outwards as far as the side wall (6) of the tyre (10) and is aligned with said side wall, wherein the edge (21) is arranged axially within the maximum axial width of the side wall.

7. Pneumatic vehicle tyre (10) according to at least the preceding claim, **characterized in that** the bead lip (9), as viewed in the tyre cross section, extends from the edge (21) radially outwards axially within a conical envelope surface (24), which is tangential to the bead lip (9) in the region of the edge (21) and also the side wall (6), preferably **in that** the bead lip (9), as viewed in the tyre cross section, is arranged, from the edge (21), axially outside the edge (21) and is formed so as to have a concave curvature.

8. Pneumatic vehicle tyre (10) according to at least one of the preceding claims, **characterized in that** the pneumatic vehicle tyre (10) is suitable for mounting on a wheel rim (11) with a J profile, preferably on an aluminium wheel rim with a J profile.

9. Pneumatic vehicle tyre (10) according to at least one of the preceding claims, **characterized in that** the tyre is suitable for a van or for a passenger motor car, preferably for a van.

10. Combination of a pneumatic vehicle tyre (10) and a wheel rim (11) having a curved wheel-rim-flange region (12) with a wheel-rim-flange radius R1 of at least 9.5 mm, wherein the pneumatic vehicle tyre (10) is designed according to at least one of the preceding claims, **characterized in that**
• an overlaying of the cross sections of wheel rim (11) and tyre (12) in the non-mounted state has an overlap (20) in the region of an axially outer bead-lip edge (21) with an extent (22) perpendicular to the wheel-rim-flange surface of 0.2 mm to 0.7 mm, preferably approximately 0.3 mm.

11. Combination according to Claim 10, **characterized in that**
• an overlaying of the cross sections of wheel rim (11) and tyre (12) in the non-mounted state has an overlap (20) in the region of an axially outer bead-lip edge (21) with an axial extent (23) of 0.3 mm to 0.7 mm, preferably approximately 0.5 mm.

## Revendications

1. Pneumatique de véhicule (10) avec une bande de roulement (1), deux parois latérales (6) et deux zones de talon (5), le pneumatique de véhicule (10) étant adapté au montage sur une jante (11) avec une zone de rebord de jante courbée (12) avec un rayon de rebord de jante R1 d'au moins 9,5 mm,
- une lèvre de talon (9) entourant la circonférence de la paroi latérale de pneumatique étant agencée axialement à l'extérieur (A) sur au moins une paroi latérale de pneumatique (6),
- la lèvre de talon (9) présentant axialement à l'extérieur (A) une surface de lèvre de talon (13), qui est destinée à s'appuyer en totalité ou en partie sur la zone de rebord de jante courbée (12),
- et la surface de lèvre de talon (13) étant courbée de manière concave, considérée dans la section transversale du pneumatique, et présentant se faisant un rayon de courbure R2 de R2 < 9,5 mm,
- en ce que la surface de lèvre de talon (13) présente un arc de cercle (14) avec un rayon R2 de R2 < 9,5 mm,
**caractérisé en ce que**
- le rayon R2 remplit un rapport R2/9,5 mm de 0,57 à 0,73, et
- **en ce que** l'arc de cercle (14) présente un angle d'ouverture (15) de 40° à 55°.

2. Pneumatique de véhicule (10) selon au moins l'une quelconque des revendications précédentes, **caractérisé en ce que** le rayon R2 remplit un rapport R2/9,5 mm de 0,65 à 0,73.

3. Pneumatique de véhicule (10) selon au moins l'une quelconque des revendications précédentes, **caractérisé en ce que** le rayon R2 est de 6,0 mm à 8,0 mm, de préférence d'environ 7,0 mm.

4. Pneumatique de véhicule (10) selon au moins la revendication 2, **caractérisé en ce que** l'arc de cercle (14) présente un angle d'ouverture (15) de 43° à 50°.

5. Pneumatique de véhicule (10) selon au moins l'une quelconque des revendications précédentes, **caractérisé en ce que** la lèvre de talon (9) présente une hauteur radiale (16) de 13,6 mm à 18,0 mm, de préférence de 13,6 mm à 15,6 mm.

6. Pneumatique de véhicule (10) selon au moins l'une quelconque des revendications précédentes, **caractérisé en ce que** la surface de lèvre de talon courbée de manière concave (13), considérée dans la section transversale du pneumatique, s'étend axialement vers l'extérieur jusqu'à un bord (21) délimitant la lèvre de talon (9) et **en ce que** la lèvre de talon (9) s'étend depuis le bord (21) radialement vers l'extérieur jusqu'à la paroi latérale (6) du pneumatique (10) et est alignée avec celui-ci, le bord (21) étant agencé axialement à l'intérieur de la largeur axiale maximale de la paroi latérale.

7. Pneumatique de véhicule (10) selon au moins la revendication précédente, **caractérisé en ce que** la lèvre de talon (9), considérée dans la section transversale du pneumatique, s'étend depuis le bord (21) radialement vers l'extérieur axialement à l'intérieur d'une surface d'enveloppe conique (24), qui s'applique tangentiellement sur la lèvre de talon (9) dans la zone du bord (21) ainsi que de la paroi latérale (6), de préférence **en ce que** la lèvre de talon (9), considérée dans la section transversale du pneumatique, est agencée depuis le bord axialement à l'extérieur du bord (21) et est réalisée avec une courbure concave.

8. Pneumatique de véhicule (10) selon au moins l'une quelconque des revendications précédentes, **caractérisé en ce que** le pneumatique de véhicule (10) est adapté au montage sur une jante (11) à profil en J, de préférence sur une jante en aluminium à profil en J.

9. Pneumatique de véhicule (10) selon au moins l'une quelconque des revendications précédentes, **caractérisé en ce que** le pneumatique est adapté à une camionnette ou à une voiture particulière, de préférence à une camionnette.

10. Combinaison d'un pneumatique de véhicule (10) et d'une jante (11) avec une zone de rebord de jante courbée (12) avec un rayon de rebord jante R1 d'au moins 9,5 mm, le pneumatique de véhicule (10) étant réalisé selon au moins l'une quelconque des revendications précédentes,
**caractérisée en ce que**
- une superposition des sections transversales de la jante (11) et du pneumatique (12) à l'état non monté présente une coïncidence (20) dans la zone d'un bord de lèvre de talon axialement extérieur (21) avec une extension (22) perpendiculaire à la surface de rebord de jante de 0,2 mm à 0,7 mm, de préférence d'environ 0,3 mm.

11. Combinaison selon la revendication 10, **caractérisée en ce que**
- une superposition des sections transversales de la jante (11) et du pneumatique (12) à l'état non monté présente une coïncidence (20) dans la zone d'un bord de lèvre de talon axialement extérieur (21) avec une extension axiale (23) de 0,3 mm à 0,7 mm, de préférence d'environ 0,5 mm.
